Europäisches Patentamt

European Patent Office

Office européen des brevets

(19)

(11) Veröffentlichungsnummer: **0 199 044 B1**

(12) **EUROPÄISCHE PATENTSCHRIFT**

(45) Veröffentlichungstag der Patentschrift: **19.06.91**

(51) Int. Cl.⁵: **H01H 33/02, H01H 33/88**

(21) Anmeldenummer: **86103169.8**

(22) Anmeldetag: **10.03.86**

(54) **Gekapselter Lastschalter.**

(30) Priorität: **26.04.85 DE 3515203**

(43) Veröffentlichungstag der Anmeldung:
**29.10.86 Patentblatt 86/44**

(45) Bekanntmachung des Hinweises auf die
Patenterteilung:
**19.06.91 Patentblatt 91/25**

(84) Benannte Vertragsstaaten:
**AT BE CH DE FR GB IT LI LU NL SE**

(56) Entgegenhaltungen:
**EP-A- 0 056 632**
**EP-A- 0 118 005**

(73) Patentinhaber: **Concordia Sprecher Schaltgeräte GmbH
Industriestrasse 9
W-7024 Filderstadt 1(DE)**

(72) Erfinder: **Linke, Thomas, Dipl.-Ing.
Jakobstrasse 56
W-7024 Filderstadt 1(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

EP 0 199 044 B1

## Beschreibung

Die Erfindung betrifft einen gekapselten Lastschalter, bestehend aus einem Behälter, wenigstens einem im Behälter angeordneten Dreistellungsschalter, der mit einem außerhalb des Behälters vorgesehenen Drehantrieb (10) verbunden ist und ein Schaltmesser aufweist, das zwischen feststehenden Schaltstücken, die Ein-Aus-Geerdet-Positionen zugeordnet sind, unter Mitnahme eines Flügels verschwenkbar ist.

Aus der DE-PS 33 04 272 ist ein mehrpoliger Hochspannungs-Lastschalter in Form eines Dreistellungsschalters vergleichbarer Art bekannt. Abgesehen von dem vergleichsweise aufwendigen Aufbau ist bei dem bekannten Schalter nachteilig, daß zur Realisierung der Schaltstellung "geerdet" pro Schaltkammer ein zusätzlicher feststehender Schaltkontakt benötigt wird, der außerhalb der Schaltkammer mit einem weiteren Kontakt über eine Strombrükke verbunden werden muß. Dies ist nicht nur aufwendig, sondern führt auch zu einer unerwünschten Vergrößerung der Schaltkammer, da durch das Vorhandensein von vier in der Kammer symmetrisch verteilten feststehenden Schaltstücken ein ausreichender gegenseitiger Isolierabstand zwischen allen Schaltstücken eingehalten werden muß, der zu entsprechendem Raumbedarf führt.

Aufgabe der Erfindung ist es, einen gekapselten Lastschalter der eingangs angegebenen Art unter Gewährleistung eines konstruktiv besonders einfachen und damit wirtschaftlichen Aufbaus äußerst kompakt und funktionssicher auszubilden.

Diese Aufgabe wird nach der Erfindung im wesentlichen dadurch gelöst, daß der Behälter mit Isoliergas gefüllt ist, wobei elektrische Anschlüsse sowie die für den Drehantrieb erforderlichen Welle gasdicht aus dem Behälter herausgeführt sind, daß jeder Dreistellungsschalter jeweils in einer Isolierstoffkammer angeordnet ist, daß der Flügel als Kompressionsflügel ausgebildet ist, und daß jede Isolierstoffkammer drei feststehende Schaltstücke aufweist, die im wesentlichen an den Eckpunkten eines spitzwinkeligen Dreiecks mit im Vergleich zu den etwa gleich langen Seiten kurzer Basis gelegen sind und daß das an der zumindest im wesentlichen innerhalb der Dreiecksfläche verlaufenden Schaltwelle befestigte Schaltmesser jeweils zwischen zwei feststehenden Schaltstücken eine bezüglich der Schaltwelle mittenversetzte Strombahn bildet.

Durch die Reduzierung der Anzahl der feststehenden Schaltstücke, welche durch die spezielle Schaltmesserausgestaltung und Positionierung der feststehenden Schaltstücke ermöglicht wird, läßt sich eine äußerst kompakte Anordnung erzielen, bei der dennoch in allen auf drei Schaltstellungen reduzierten Stellungen ein ausreichender Isolierabstand zwischen den jeweiligen Kontakten gewährleistet ist.

Das Schaltmesser kann gerade ausgebildet und mit der Schaltwelle außermittig verbunden oder auch symmetrisch gekrümmt sein.

Nach einem weiteren wesentlichen Merkmal der Erfindung ist die jeweilige Isolierstoffkammer ringscheibenförmig gestaltet, und es ist im Bereich zwischen den beiden feststehenden Schaltstücken, welche den geringsten gegenseitigen Abstand aufweisen, ein sich bis zur Schaltwelle erstreckendes Trennkeilelement vorgesehen. Dieses Trennkeilelement, das mit der Isolierstoffkammer verbunden und insbesondere einteilig mit ihr gespritzt ist, unterteilt den Kammerraum.

Dem Schaltmesser benachbart und bevorzugt auch als Schaltmesserträger ausgebildet ist ein sich im wesentlichen diametral durch die Isolierstoffkammer erstreckender, mit der Schaltwelle verbundener und in der Ein-Position zwischen Schaltmesser und Trennkeilelement gelegener Kompressionsflügel vorgesehen. Dieser Kompressionsflügel, der an seinem radial außenliegenden Endbereichen mit Gasdurchtrittsöffnungen versehen ist, stellt während der Schaltbewegungen sicher, daß das in dem den Dreistellungsschalter umschließenden Behälter enthaltene Isoliergas, insbesondere $SF_6$, mit der erforderlichen Strömungsgeschwindigkeit zum Zwecke der Lichtbogenlöschung gegen die Kontakte geblasen wird.

Eine weitere vorteilhafte Besonderheit der Erfindung besteht darin, daß Schaltmesser und Kompressionsflügel form-und kraftschlüssig in mehreren unterschiedlichen Winkellagen relativ zu den feststehenden Schaltstücken, die in den ebenfalls in unterschiedlichen Winkellagen fixierbaren Isolierstoffgehäuse angebracht sind, auf die Schaltwelle aufsteck- und fixierbar sind.

Auf diese Weise können im jeweiligen Lastschalter mehrere Dreistellungsschalter mit jeweils räumlich optimal liegenden Außenanschlüssen vorgesehen werden.

Eine weitere vorteilhafte Ausgestaltung der Erfindung besteht darin, daß die von jeweils einem Isolierstoffgehäuse umgrenzten Schaltkammer als Einzelmodule ausgebildet sind und daß vorgebbare Anzahlen solcher Module unter gegenseitiger Verspannung auf die Schaltwelle aufsteckbar sind. Aufgrund dieser Modulbauweise lassen sich unterschiedlichste Schalter auf einfachste Weise zusammenstellen.

Weitere vorteilhafte Merkmale der Erfindung sind in Unteransprüchen angegeben.

Die Erfindung wird nachfolgend anhand von Ausführungsbeispielen unter Bezugnahme auf die Zeichnung näher erläutert; in der Zeichnung zeigt:

Fig. 1    eine schematische Darstellung einer Lastschaltanlage mit zwei Kabelabzweigen,

Fig. 2    eine schematische Seitenansicht der
Anlage nach Fig. 1,

Fig. 3    eine schematische Schnittansicht eines Dreistellungsschalters wie er in
der Anlage nach Fig. 1 verwendet ist,
und

Fig. 4    eine schematische Schnittansicht des
Dreistellungsschalters nach Fig. 3 in
einer anderen Schaltposition.

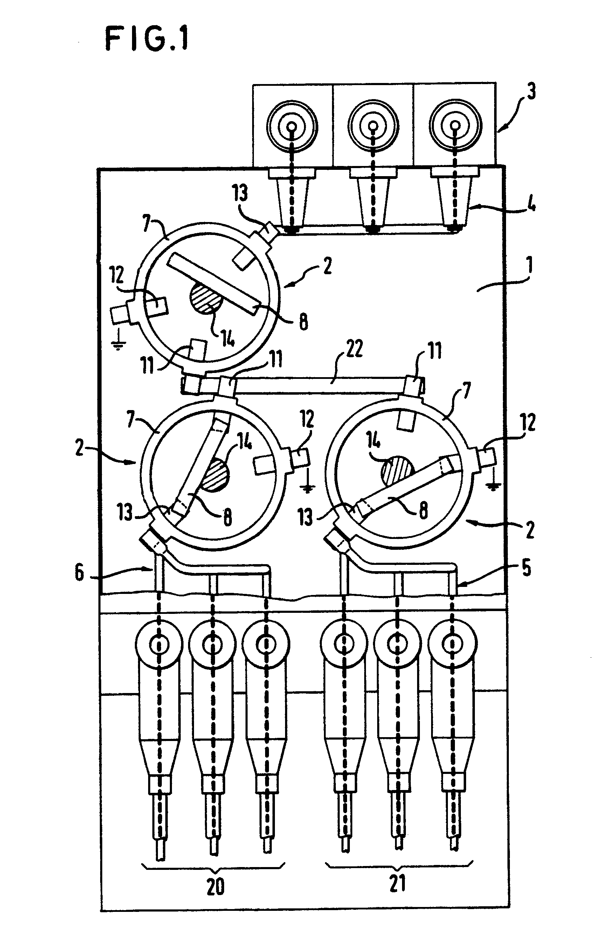

Der Lastschalter nach Fig. 1 besteht aus einem
gasdichten Behälter 1, in dem im vorliegenden Fall
drei identisch ausgebildete Dreistellungsschalter 2
angeordnet sind. Von einer auf der Oberseite des
Behälters 1 vorgesehenen Sicherungsanordnung 3
kommende Anschlußleiter 4 sind ebenso wie zu
Kabelabgängen 20, 21 führenden Leiter 5, 6 druckdicht aus dem Behälter 1 geführt.

Jeder Dreistellungsschalter 2 besteht aus einer
flachen, ringscheibenförmigen Isolierstoffkammer
mit zentrisch durch die Kammer geführter Schaltwelle 14, an der jeweils ein Schaltmesser 8 befestigt ist.

Dieses Schaltmesser wirkt mit drei feststehenden Schaltstücken 11, 12, 13 zusammen, die im
wesentlichen an den Eckpunkten eines spitzwinkeligen Dreiecks mit im Vergleich zu den etwa gleich
langen Seiten kurzer Basis gelegen sind. Eines der
beiden Schaltstücke 11, 12, die den geringsten
gegenseitigen Stand aufweisen, ist jeweils einem
Erdungsanschluß zugeordnet. Das jeweils andere
Anschlußstück kann über das Schaltmesser 8 mit
dem entfernt liegenden Anschlußstück 13 verbunden werden, das seinerseits wiederum in einer
anderen Schaltstellung über das Schaltmesser 8
mit dem Erdungsanschluß 12 verbindbar ist.

In einem dargestellten Ausführungsbeispiel ist
das Schaltmesser 8 gerade ausgebildet und außermittig mit der Schaltwelle 14 verbunden. Unabhängig von der konkreten konstruktiven Ausführung
des Schaltmessers 8 ist jeweils wesentlich, daß die
Verbindungsgerade zwischen den durch das
Schaltmesser 8 elektrisch miteinander zu verbindenden feststehenden Schaltstücken 11 nicht
durch die Schaltwellenmitte, sondern stets seitlich
versetzt dazu verläuft.

Aufgrund der speziellen Anordnung der feststehenden Schaltstücke 11, 12, 13 und der Ausgestaltung des Schaltmessers 8 ist es möglich, die erforderlichen Schalteroperationen mit nur drei Schaltstellungen zu realisieren, wodurch die Abstände
zwischen den feststehenden Kontakten trotz kompakter Bauweise größer als bei entsprechenden
Schaltern mit vier Festkontakten werden und dieser
größere Abstand zwischen den Festkontakten den
Vorteil einer größeren Sicherheit mit sich bringt.

Bei der Anlage nach Fig. 1 sind drei Dreistellungsschalter 2 verwendet, wobei einem eingangsseitigen, in der Aus-Stellung gezeichneten Schalter
2 zwei parallel geschaltete Dreistellungsschalter 2
nachgeschaltet sind, die jeweils zu einem Kabelabzweig 20, 21 führen. Einer dieser beiden Schalter
ist in der Ein-Stellung gezeigt, während der zum
Kabelabzweig 21 führende Schalter 2 sich in der
geerdeten Position befindet. Mit dem eingangsseitigen Schalter sind die beiden abgangsseitigen
Schalter 2 über eine Verbindungsschiene 22 verbunden.

Es ist zu sehen, daß alle Dreistellungsschalter
2 identisch ausgebildet sind und durch unterschiedliche Anordnung auf der Schaltwelle 14 aufgrund der sich dabei ergebenden Änderung der
Positionierung der feststehenden Schaltstücke 11,
12, 13 in einer zur Erzielung eines kompakten,
raumsparenden Aufbaus hinsichtlich ihrer Relativlage optimal angeordnet werden können.

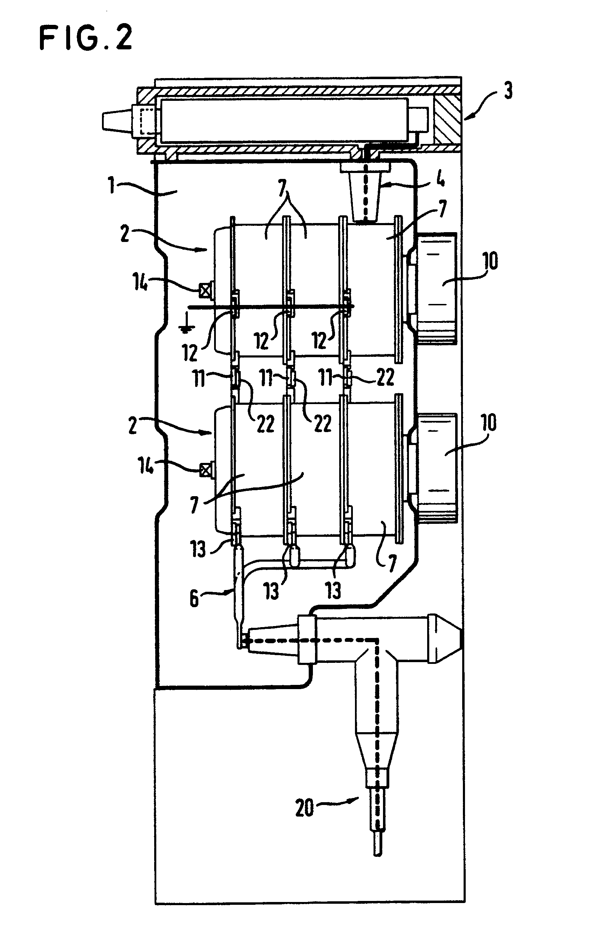

Dieser Kompaktaufbau ist auch der Fig. 2 zu
entnehmen, welche das Modulprinzip der Dreistellungsschalter erkennen läßt.

Im dargestellten Falle sind jeweils auf einer von
einem Antrieb 10 betätigten Schaltwelle 14 drei
hinsichtlich ihrer Funktion anhand der Fig. 1 bereits
beschriebene Dreistellungsschalter angeordnet, deren Isolierstoffkammern 7 unmittelbar aneinandergrenzend miteinander verbunden sind.

Durch die Anordnung der feststehenden Schaltstücke 11, 12, 13 ergeben sich optimal kurze elektrische Verbindungswege, und die Kabelabgänge
20 sowie die Sicherungen 3 können raumsparend
in die Gesamtanordnung integriert werden.

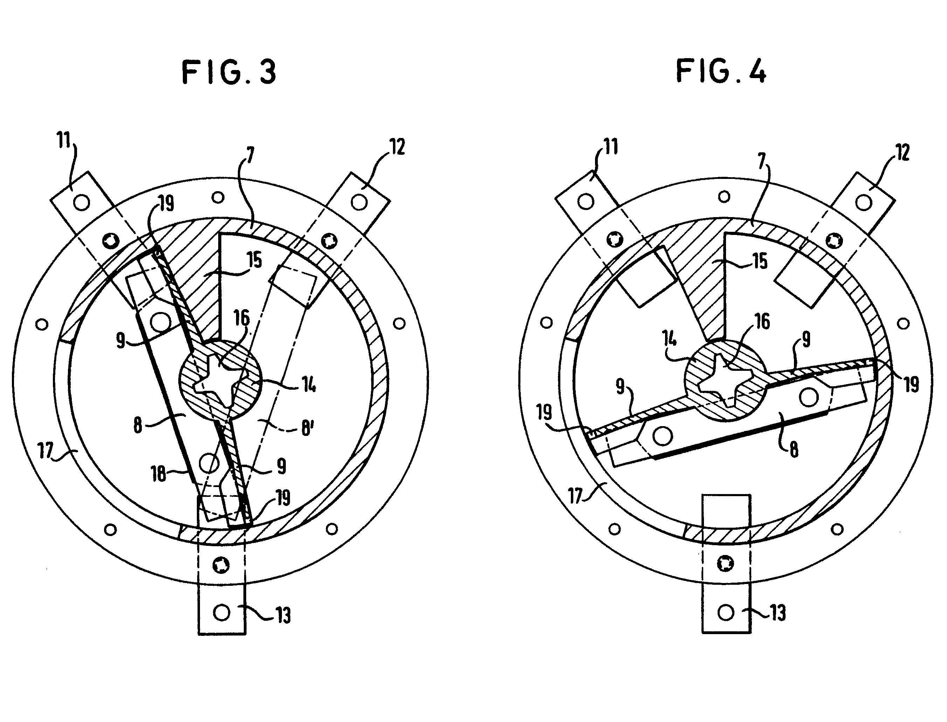

Fig. 3 zeigt eine schematische Schnittansicht
eines Dreistellungsschalters nach der Erfindung,
bei dem zwischen den beiden feststehend angebrachten Schaltstücken 11, 12, die einen gegenseitigen Winkelabstand von etwa 75° besitzen, ein
Trennkeilelement 15 angebracht, das mit der Isolierstoffkammer fest verbunden, insbesondere mit
ihr einteilig ausgebildet ist. Dieses Trennkeilelement ist unmittelbar benachbart dem Schaltstück
11 angeordnet und erstreckt sich bis zur Schaltwelle 14. In Umfangsrichtung überdeckt dieses Trennkeilelement beispielsweise einen Winkelbereich
von etwa 25°.

In Fig. 3 ist der Dreistellungsschalter in Ein-
Position mit ausgezogenen Linien dargestellt, und
die geerdete Position ist mit dem strichpunktiert
gezeichneten Schaltmesser 8' angedeutet.

In der Ein-Position verbindet das Schaltmesser
8 das Schaltstück 11 mit dem Schaltstück 13.
Durch Verschwenken des Schaltmessers 8 im Gegenuhrzeigersinn gelangt der Schalter zunächst in
die Aus-Stellung (vgl. Fig. 4), und bei einer weiteren Betätigung in die geerdete Position, in der das
Schaltstück 13 mit dem Schaltstück 12 verbunden
ist.

Dem Schaltmesser 8 benachbart ist ein in der Ein-Position am Trennkeilelement 15 anliegender, sich im wesentlichen diametral durch die Isolierstoffkammer erstreckender und mit der Schaltwelle 14 verbundener Kompressionsflügel 9 vorgesehen, der gleichzeitig als Schaltmesserträger ausgebildet ist. Das Schaltmesser 8 besteht aus einem Doppelmesser mit Kontakt-Distanzelementen, gegen die die beiden Messer in üblicher Weise durch Vorspannfedern gedrückt werden, so daß sich der erforderliche Kontaktdruck zwischen den feststehenden Schaltstücken und dem Schaltmesser ergibt.

Im radial äußeren Bereich des Kompressionsflügel 9 sind Öffnungen 19 vorgesehen. Ferner weist die Isolierstoffkammer 7 in ihrer Außenringwand zumindest eine größere Öffnung 17 auf, über die der Innenraum der Isolierstoffkammer 7 mit dem Behälter 1 in Verbindung steht und somit stets neues frisches Isoliergas in den Dreistellungsschalter gelangen kann.

Aufgrund einer axial verzahnten Kupplung 16 zwischen Schaltwelle 14 und dem das Schaltmesser 8 tragenden Kompressionsflügel 9 läßt sich das Schaltmesser in Abhängigkeit von den innerhalb einer Schaltanlage geforderten Gegebenheiten in unterschiedlichen Ausgangsstellungen lagegenau positionieren. Die Ausgangslage wird durch einfaches Aufstecken auf die Schaltwelle 14 vorgegeben.

Bei der in den Fig. 3 und 4 gezeigten Anordnung ist das Schaltstück 11 der Sammelschiene, das Schaltstück 13 dem Kabelabgang und das Schaltstück 13 der Erdverbindung zugeordnet.

Wenn der Dreistellungsschalter ausgehend von der in Fig. 3 gezeigten Ein-Position in die Aus-Position gemäß Fig. 4 umgeschaltet wird, dann bewegt sich der Kompressionsflügel 9 zusammen mit dem Schaltmesser 8 im Gegenuhrzeigersinn weg vom Trennkeilelement 15, wobei in dem Bereich zwischen Trennkeilelement 15 und dem Kompressionsflügel 9 ein Unterdruck entsteht und als Folge davon eine starke Strömung von Isoliergas, insbesondere SF$_6$ gegen das Schaltstück 11 gerichtet und damit ein entstehender Lichtbogen unverzüglich gelöscht wird.

Wenn der Kompressionsflügel 9 die Öffnung 17 im Isolierstoffgehäuse überstreicht, kann verbrauchtes Löschgas durch frisches Gas ersetzt bzw. ausgetauscht werden. Während der Schwenkbewegung des Kompressionsflügels 9 entsteht auf der vom Schaltmesser 8 abgewandten Seite ein Überdruckraum, aus dem über entsprechende Öffnungen ebenfalls Löschgas in den sich ausbildenden Unterdruckraum strömen kann.

Aus der in Fig. 4 gezeigten Aus-Position kann das Schaltmesser 8 in einem weiteren Schaltvorgang in die in Fig. 3 strichliert dargestellte Erdungs-Position geschaltet werden. Durch entsprechende Drehrichtungsumkehr des Antriebs erfolgt dann die Umschaltung von der Erdungsposition in die Aus-Position und in einem weiteren Schaltvorgang von der Aus-Position in die in Fig. 3 dargestellte Ein-Position.

## Ansprüche

1. Gekapselter Lastschalter, bestehend aus einem Behälter, wenigstens einem im Behälter angeordneten Dreistellungsschalter, der mit einem außerhalb des Behälters vorgesehenen Drehantrieb (10) verbunden ist und ein Schaltmesser aufweist, das zwischen feststehenden Schaltstücken, die Ein-Aus-Geerdet-Positionen zugeordnet sind, unter Mitnahme eines Flügels verschwenkbar ist,
dadurch **gekennzeichnet**,
daß der Behälter (1) mit Isoliergas gefüllt ist, wobei elektrische Anschlüsse sowie die für den Drehantrieb (10) erforderlichen Welle gasdicht aus dem Behälter (1) herausgeführt sind, daß jeder Dreistellungsschalter (2) jeweils in einer Isolierstoffkammer (7) angeordnet ist, daß der Flügel als Kompressionsflügel (9) ausgebildet ist, und daß jede Isolierstoffkammer (7) drei feststehende Schaltstücke (11, 12, 13) aufweist, die im wesentlichen an den Eckpunkten eines spitzwinkeligen Dreiecks mit im Vergleich zu den etwa gleich langen Seiten kurzer Basis gelegen sind und daß das an der zumindest im wesentlichen innerhalb der Dreiecksfläche verlaufenden Schaltwelle (14) befestigte Schaltmesser (8) jeweils zwischen zwei feststehenden Schaltstücken eine bezüglich der Schaltwelle (14) mittenversetzte Strombahn bildet.

2. Lastschalter nach Anspruch 1,
dadurch **gekennzeichnet**,
daß das Schaltmesser (8) gerade ausgebildet und mit der Schaltwelle (14) außermittig verbunden ist.

3. Lastschalter nach Anspruch 1,
dadurch **gekennzeichnet**,
daß das Schaltmesser (8) symmetrisch gekrümmt ausgebildet ist.

4. Lastschalter nach einem der vorhergehenden Ansprüche,
dadurch **gekennzeichnet**,
daß die Isolierstoffkammer (7) ringscheibenförmig gestaltet und im Bereich zwischen den beiden feststehenden Schaltstücken (11, 12), welche den geringsten gegenseitigen Abstand aufweisen, ein sich bis zur Schaltwelle (14) erstreckendes Trennkeilelement (15) vorgesehen ist.

5. Lastschalter nach Anspruch 4,
dadurch **gekennzeichnet,**
daß dem Schaltmesser (8) benachbart ein sich im wesentlichen diametral durch die Isolierstoffkammer (7) erstrekkender, mit der Schaltwelle (14) verbundener und in der Ein-Position zwischen Schaltmesser (8) und Trennkeilelement (15) gelegener Kompressionsflügel (9) vorgesehen ist.

6. Lastschalter nach Anspruch 5,
dadurch **gekennzeichnet,**
daß der Kompressionsflügel (9) in seinen radial äußeren Bereichen mit durchgehenden öffnungen (19) versehen ist.

7. Lastschalter nach Anspruch 5,
dadurch **gekennzeichnet,**
daß im Trennkeilelement (15) in Höhe des benachbarten feststehenden Schaltstückes (11) wenigstens eine Queröffnung vorgesehen ist.

8. Lastschalter nach einem der vorhergehenden Ansprüche,
dadurch **gekennzeichnet,**
daß der Kompressionsflügel (9) als Träger für das Schaltmesser (8) ausgebildet ist.

9. Lastschalter nach einem der vorhergehenden Ansprüche,
dadurch **gekennzeichnet,**
daß Schaltmesser (8) und/oder Kompressionsflügel (9) form- und kraftschlüssig in mehreren unterschiedlichen Winkellagen relativ zu den feststehenden Schaltstücken (11, 12, 13) auf die Schaltwelle (14) aufsteck- und fixierbar sind.

10. Lastschalter nach einem der vorhergehenden Ansprüche,
dadurch **gekennzeichnet,**
daß in der Außenringwand (16) des Isolierstoffgehäuses (7) zumindest eine Öffnung (17) vorgesehen ist, die während eines Teils des Ausschaltvorgangs vom Kompressionsflügel (9) überlaufen wird.

11. Lastschalter nach einem der vorhergehenden Ansprüche,
dadurch **gekennzeichnet,**
daß jedes Schaltmesser (8) aus einem Doppelmesser mit Kontaktdistanzelementen (18) besteht und daß der radial außenliegende Spalt zwischen den beiden Messern bei Schaltvorgängen einen Blasspalt bildet.

12. Lastschalter nach einem oder mehreren der vorhergehenden Ansprüche,
dadurch **gekennzeichnet,**
daß die von jeweils einem Isolierstoffgehäuse (7) umgrenzten Schaltkammern als Einzelmodule ausgebildet sind und daß vorgebbare Anzahlen solcher Module unter gegenseitiger Verspannung auf die Schaltwelle (14) aufsteckbar sind.

**Claims**

1. Encapsulated load switch, comprising a housing, at least one 3-position switch mounted in the housing, the 3-position switch being connected with a rotary drive (10) provided at the exterior of the housing and comprising a switch blade pivotable together with a vane between fixed switch contacts which are associated with On, Off and Earthed positions,
characterized in that
the housing (1) is filled with isolating gas, with electrical terminals and the shaft necessary for the rotary drive (10) being led out of the housing (1) in a gas-tight manner; in that each 3-position switch (2) is mounted in a respective chamber (7) of insulating material; in that the vane is realised as a compression vane (9); and in that each chamber (7) of insulating material comprises three fixed switch contacts (11, 12, 13), which are generally placed at the apices of an acute angled triangle having a shorter base in comparison to its sides which are of approximately the same length; and in that the switch blade (8), fixed to the switch shaft (14) which extends at least essentially within the area of the triangle, forms a current path between two respective fixed switch contacts which is off-center with respect to the switch shaft (14).

2. Load switch according to claim 1,
characterized in that
the switch blade (8) is made straight and is eccentrically connected to the switch shaft (14).

3. Load switch according to claim 1,
characterized in that
the switch blade (8) is of symmetrically curved shape.

4. Load switch according to one of the preceding claims,

characterized in that
the chamber (7) of insulating material is designed in the form of a circular disk and in that a separating wedge member (15) which extends up to the switch shaft (14) is provided in the region between the two fixed switch contacts (11, 12) which have the smallest spacing.

5. Load switch according to claim 4,
characterized in that
a compression vane (9) is provided adjacent the switch blade (8) and extending essentially diametrically through the chamber (7) of insulating material, the compression vane (9) being connected to the switch shaft (14) and being disposed in the On position between the switch blade (8) and the separating wedge member (15).

6. Load switch according to claim 5,
characterized in that
the compression vane (9) is provided with through going openings (19) in its radially outer regions.

7. Load switch according to claim 5,
characterized in that
at least one transverse opening is provided in the separating wedge member (15) at the level of the neighbouring fixed switch contact (11).

8. Load switch according to one of the preceding claims,
characterized in that
the compression vane (9) is formed as a carrier for the switch blade (8).

9. Load switch according to one of the preceding claims,
characterized in that
the switch blade (8) and/or the compression vane (9) can be engaged over and fixed onto the switch shaft (14) in form- and force-locked manner in several different angular positions relative to the fixed switch contacts (11, 12, 13).

10. Load switch according to one of the preceding claims,
characterized in that
in the outer circular wall (16) of the chamber (7) of insulating material, there is provided at least one opening (17) which is passed over by the compression vane (9) during a portion of the switching off process.

11. Load switch according to one of the preceding claims,

characterized in that
each switch blade (8) comprises a double blade and contact spacing members (18); and in that the radially outer gap between the two blades forms a blowing gap during switching processes.

12. Load switch according to one or several of the preceding claims,
characterized in that
the switch chambers, which are in each case bounded by a respective housing (7) of insulating material are realised as individual modules and in that predeterminable numbers of such modules are engageable over the switch shaft (14) with mutual clamping.

**Revendications**

1. Interrupteur à coupure en charge logé dans une enveloppe, comprenant un boîtier, au moins un commutateur à trois positions logé dans le boîtier, le commutateur à trois positions étant relié à un entraînement rotatif (10) prévu à l'extérieur du boîtier et un couteau d'interrupteur, qui peut être basculé sous l'entraînement d'une ailette entre des plots de commutation fixes arrangés suivant des positions d'ouverture, de fermeture et de mise à la terre, caractérisé en ce que le boîtier (1) est rempli d'un gaz isolant, les bornes électriques ainsi que l'arbre nécessaire pour l'entraînement rotatif (10) étant conduits de façon étanche vers l'extérieur du boîtier (1), en ce que chaque commutateur à trois positions (2) est disposé dans une chambre à matériau isolant (7) respective, en ce que l'ailette est réalisée sous la forme d'une ailette de compression (9), et en ce que chaque chambre à matériau isolant (7) comporte trois plots de commutateurs fixes (11, 12, l3) qui sont essentiellement disposés au sommet d'un triangle acutangle ayant une base plus courte que ses côtés longs approximativement égaux, et en ce que le couteau d'interrupteur (8) fixé à l'arbre d'interrupteur (14) qui passe au moins essentiellement à l'intérieur de la surface triangulaire forme à chaque fois entre deux plots de commutateur fixes un trajet électrique décentré par rapport à l'arbre de commutateur (14).

2. Interrupteur selon la revendication 1, caractérisé en ce que le couteau de commutateur (8) est rectiligne et relié de façon décentrée sur l'arbre de commutateur (14).

3. Interrupteur selon la revendication 1, caractérisé en ce que le couteau de commutateur (8) est incurvé de façon symétrique.

4. Interrupteur selon l'une des revendications précédentes, caractérisé en ce que la chambre à matériau isolant (7) a une forme de disque annulaire et en ce qu'il est prévu un élément de séparation en forme de coin (15) s'étendant jusqu'à l'arbre de commutateur (14) dans la zone entre les deux plots de commutateur fixes (11, 12) qui sont les plus rapprochés.

5. Interrupteur selon la revendication 4, caractérisé en ce qu'il est prévu au voisinage du couteau de commutateur (8) une ailette de compression (9) s'étendant généralement suivant un diamètre à travers la chambre à matériau isolant (7), l'ailette de compression (9) étant reliée à l'arbre de commutateur (14) et étant disposée dans la position de fermeture entre le couteau de commutateur (8) et l'élément de séparation en forme de coin (15).

6. Interrupteur selon la revendication 5, caractérisé en ce que l'ailette de compression (9) comporte des ouvertures traversantes (19) dans ses zones radiales extérieures.

7. Interrupteur selon la revendication 5, caractérisé en ce qu'il est prévu au moins une ouverture transversale dans l'élément de séparation en forme de coin (15) à la hauteur du plot de commutateur fixe (11) voisin.

8. Interrupteur selon l'une des revendications précédentes, caractérisé en ce que l'ailette de compression (9) est réalisée sous la forme d'un support pour le couteau de commutateur (8).

9. Interrupteur selon l'une des revendications précédentes, caractérisé en ce que le couteau de commutateur (8) et/ou l'ailette de compression (9) peuvent être emboîtés et fixés par verrouillage de forme et de force sur l'arbre de commutateur (14) en plusieurs différentes positions angulaires par rapport aux plots de commutateurs fixes (11, 12, 13).

10. Interrupteur selon l'une des revendications précédentes, caractérisé en ce qu'il est prévu au moins une ouverture (17) dans la paroi circulaire extérieure (16) de la chambre à matériau isolant (7), l'ailette de compression (9) passant devant ladite ouverture (17) pendant une partie de la course d'ouverture.

11. Interrupteur selon l'une des revendications précédentes, caractérisé en ce que chaque couteau de commutateur (8) comprend un couteau double présentant des éléments d'écartement de contact (18) et en ce que la fente située radialement vers l'extérieur entre les deux couteaux forme une fente de soufflage lors des actions de commutation.

12. Interrupteur selon l'une ou plusieurs des revendications précédentes, caractérisé en ce que chaque chambre de commutateur délimitée par un boîtier à matériau isolant (16) est formée en tant que module individuel et en ce qu'un nombre prédéterminé de tels modules peuvent être engagés sous précompression mutuelle sur l'arbre de commutateur (14).

# FIG.1

# FIG.2

# FIG.3

# FIG.4

EP 0 199 044 B1